# EUROPÄISCHE PATENTSCHRIFT

(11) **EP 1 053 066 B1**
(45) Veröffentlichungstag und Bekanntmachung des Hinweises auf die Patenterteilung: **03.07.2002**
(21) Anmeldenummer: 99900868.3
(22) Anmeldetag: 03.02.1999
(51) Int. Cl.: B21D 43/05

(54) **FÖRDERVORRICHTUNG**
CONVEYOR DEVICE
DISPOSITIF DE TRANSPORT

(30) Priorität: 09.02.1998 CH 31698
(43) Veröffentlichungstag der Anmeldung: 22.11.2000
(73) Patentinhaber: ELPATRONIC AG, 8962 Bergdietikon (CH)
(72) Erfinder: MALINIE, Robert, F-91240 Saint Michel sur Orge (FR)
(86) Internationale Anmeldenummer: CH9900046
(87) Internationale Veröffentlichungsnummer: WO9939849

(56) Entgegenhaltungen:
- DE-A- 2 406 619
- DE-B- 1 151 483
- GB-A- 2 051 645
- GB-A- 2 153 281
- US-A- 4 273 507

## Beschreibung

Die vorliegende Erfindung betrifft eine Fördervorrichtung für eine modular aufgebaute Maschinenstrasse zur Herstellung von Behältern, insbesondere von Kübeln oder Fässern gemäss Oberbegriff des Anspruchs 1.

Maschinenstrassen für die Herstellung von Behältern weisen in der Regel eine Mehrzahl nacheinander angeordneter Bearbeitungsmaschinen auf, mit denen die Behälterrohlinge in ihre endgültige Form gebracht werden können. Für die Herstellung von zylindrischen oder sich verjüngenden Behältern, insbesondere Kübel oder Fässer, mit einem Fassungsvermögen von ca. 3 bis 70 Liter, werden geschweisste Behältermäntel mit Hilfe einer geeigneten Fördervorrichtung in einer ersten Maschine, insbesondere einer Expansionsmaschine exakt positioniert, um dort geformt, insbesondere konifiziert zu werden. Für einen nächsten Bearbeitungsschritt werden die expandierten Behälter wiederum mit Hilfe der Fördervorrichtung von den Mitnehmern erfasst und in der nächsten Bearbeitungsmaschine exakt positioniert. In dieser Weise können die Behälterrohlinge schrittweise zu den einzelnen Bearbeitungsmaschinen geführt werden, welche diese Rohlinge in gewünschter Weise weiterverformen, mit einem Bördelrand versehen, mit Sicken (curl bead) versehen, einen Flansch anformen und/oder mit einem Bodenteil versehen. Dazu müssen die Rohlinge jeweils exakt in vorgegebene Positionen der Bearbeitungsmaschinen gebracht werden. Die Bearbeitungsgenauigkeit hängt wesentlich von der Positionierungsgenauigkeit der verwendeten Fördersysteme ab. Für die Herstellung von Behältern haben sich Fördersysteme mit hin- und herlaufenden Holmpaaren im wesentlichen bewährt.

Geeignete Fördervorrichtungen mit hin- und herlaufenden Holmpaaren sind dem Fachmann, bspw. aus der GB-A-2 169 531 bekannt. Die in dieser Druckschrift offenbarte Fördervorrichtung weist ein Holmpaar auf, welches mit Hilfe eines ersten Antriebsmechanismus hin- und herbewegt wird. Dieser Antriebsmechnismus ist über ein aufwendiges mechanisches Getriebe mit einem zweiten Antriebsmechanismus gekoppelt, der das Holmpaar in geeigneter Weise auseinander bewegt und wieder zusammenführt. An diesem mechanisch bewegten Holmpaar sind an geeigneten Stellen Mitnehmer befestigt, mit denen die zu bearbeitenden Rohlinge erfasst und in Richtung der Holme zu einer Bearbeitungsmaschine gefördert werden. Die durch den Antriebsmechanismus erzeugte Bewegung der Mitnehmer lässt diese in einer ersten Bewegungsphase gegeneinander laufen, um die Rohlinge zu fassen, verschiebt die Mitnehmer in einer zweiten Bewegungsphase parallel zu den Holmen und lässt die Mitnehmer in einer dritten Bewegungsphase wieder auseinanderlaufen und in ihre ursprüngliche Lage zurücklaufen. Derartige Fördervorrichtungen weisen nicht nur einen komplizierten Antriebsmechanismus auf, sondern sind für Unterhaltsarbeiten schwer zugänglich, lassen sich für die Bearbeitung von unterschiedlich dimensionierten Rohlingen nur in aufwendiger Art und Weise anpassen, sind im Betrieb äusserst laut und verursachen unerwünscht starke Vibrationen. Insbesondere sind diese Fördervorrichtungen nicht sehr effizient, weil die durch die ruckartige Förderung der Rohlinge erzeugten Vibrationen eine genaue und schnelle Positionierung erschweren.

Eine andere Fördervorrichtung ist zum Beispiel aus US-A-4273507 bekannt.

Es ist deshalb Aufgabe der vorliegenden Erfindung, eine leistungsfähige Fördervorrichtung zu schaffen, welche die Nachteile der bekannten Vorrichtungen nicht aufweist und insbesondere imstande ist, Behälterrohlinge schnell, vibrations- resp. geräuscharm und mit hoher Positioniergenauigkeit zu fördern.

Insbesondere soll eine Fördervorrichtung geschaffen werden, deren Förderbewegung und Förderablauf in einfacher Weise an unterschiedlich dimensionierte Behälterrohlinge angepasst werden kann, um die Förderleistung dem Fördergut entsprechend zu optimieren.

Die zu schaffende Fördervorrichtung soll also eine effiziente Auslastung der einzelnen Bearbeitungsmaschinen ermöglichen, d.h. eine einfache, schnelle und präzise Positionierung der Behälterrohlinge ermöglichen.

Darüber hinaus soll diese Fördervorrichtung in einfacher Weise auf die Bearbeitungsgeschwindigkeit der einzelnen Maschinen und die Eigenschaften des Förderguts abstimmbar sein und für erforderliche Wartungs- und Umrüstarbeiten leicht zugänglich sein.

Diese Aufgabe wird erfindungsgemäss mit einer Fördervorrichtung gemäss Anspruch 1 gelöst und insbesondere mit Hilfe eines Holmpaars, welches von einem Förderantrieb synchron und in geeigneter Weise axial verschoben und gedreht wird. In einer bevorzugten Ausführungsform weist das Holmpaar einander zugeordnete, mit den jeweiligen Holmen fest verbundene Mitnehmergruppen auf. Diese Mitnehmergruppen werden aus ihrer Ausgangsposition synchron gegeneinander verschwenkt, um die Behälterrohlinge zu fassen. Gleichzeitig beginnen diese Mitnehmergruppen sich axial in ihre Endposition, d.h. in die Bearbeitungsposition der folgenden Bearbeitungsmaschine zu verschieben. Beim Erreichen dieser Endposition werden die Mitnehmergruppen wieder auseinandergeschwenkt, um die Behälterrohlinge für die Bearbeitung freizugeben. In einem letzten Bewegungsabschnitt laufen die ausgeschwenkten Mitnehmergruppen wieder zurück in ihre ursprüngliche Ausgangsposition.

Der Bewegungsablauf dieser Mitnehmergruppen wird lediglich durch geeignete Axial- und Drehbewegungen der Holme verursacht und wird erfindungsgemäss mit einem einzigen kontinuierlich angetriebenen Förderantrieb bewerkstelligt. Dieser Förderantrieb umfasst ein Kurvengetriebe (cam drive) mit einer Kurvenscheibe (cam), die zwischen dem Holmpaar drehbar gelagert ist und gelenkig mit einem kontinuierlich laufenden Kurbelgetriebe (crank drive) verbunden ist.

In einer bevorzugten Ausführungsform ist das Kurbelgetriebe am Maschinensockel befestigt und umfasst eine Antriebseinheit mit einem kontinuierlich laufenden Antriebsmotor, welche über ein Antriebsgetriebe und eine Antriebswelle die Kurbel des Kurbelgetriebes antreibt. Für diesen kontinuierlichen Antrieb wird vorzugsweise ein Elektromotor verwendet. Die Vorteile dieses Kurbelgetriebes sind im wesentlichen in der Laufruhe des kontinuierlichen Antriebs zu sehen. Darüber hinaus erlaubt dieser Antrieb eine einfache Steuerung der Fördervorrichtung durch die Regelung der Antriebsgeschwindigkeit des Motors. Damit kann in einfacher Weise die Geschwindigkeit des Bewegungsablaufs der Mitnehmergruppen oder allenfalls die Geschwindigkeit der einzelnen Phasen dieses Bewegungsablaufs variiert und/oder optimiert werden.

Die Kurbel dieses Kurbelantriebs ist gelenkig mit dem Kurvengetriebe verbunden. Das Kurvengetriebe umfasst, in dieser bevorzugten Ausführungsform, eine Kurvenscheibe, die mit Hilfe eines Lenkhebels um ihre Drehachse gedreht werden kann. Diese Drehachse ist in einem auf den Holmen gleitbar abgestützten Schlitten gelagert. Durch die Rotationsbewegung der Kurbel und die Gelenkverbindung zwischen Kurbel und Lenkhebel wird die Kurvenscheibe parallel zu den Holmen hin- und herbewegt und gleichzeitig hin- und hergedreht. Die Kurvenscheibe weist einen teilberollten Rand auf, an welchem Auslenkrollen anliegen. Diese Auslenkrollen sind je in einem Rollenblock gelagert, welcher wiederum an einem der beiden Holme befestigt ist. Dadurch führt eine durch die Bewegung der Kurvenscheibe verursachte Auslenkung der Auslenkrollen zu einer axialen Drehbewegung der Holme. Es versteht sich, dass die Kurvenscheibe derart gestaltet werden kann, dass die Drehbewegung der Holme synchron und gegengleich ausgeführt wird. Insbesondere kann durch die Gestaltung der Kurvenscheibe diese Drehbewegung der Holme und der an diesen Holmen befestigten Mitnehmergruppen so beeinflusst werden, dass bspw. die Schliessbewegung der Mitnehmergruppe schneller ist als deren Öffnungsbewegung.

Wegen der gelenkigen Kopplung von Kurbel und Kurvenscheibe und der Fixierung der Drehachse der Kurvenscheibe am Schlitten, bewegt sich dieser bei einer Rotationsbewegung der Kurbel in Richtung der Holme hin- und her. Da der Schlitten bei dieser erzwungenen Verschiebebewegung die an den Holmen befestigten Rollenblöcke stets mitnimmt, werden dadurch auch die Holme selbst hin- und herbewegt. Es versteht sich, dass die Amplitude dieser Hin- und Herbewegung durch die Länge der Kurbel und/oder die Länge des Lenkhebels der Kurvenscheibe eingestellt werden kann.

Diese Vorrichtung zeichnet sich also durch eine äusserst einfache und deshalb funktionssichere Bauweise aus. Diese Bauweise erlaubt es die periodischen Unterhaltsarbeiten ohne besondere technische Eingriffe vornehmen zu können. Im Falle von Betriebsstörungen bei der einen oder anderen Bearbeitungsmaschine sind diese zur Behebung der Störung frei zugänglich.

Die erfindungsgemässe Vorrichtung kann in einfacher Weise modifiziert werden und insbesondere an die unterschiedlichen Dimensionen der zu bearbeitenden Behälterrohlinge angepasst werden. So können bspw. für die Förderung von Behälterrohlingen mit grösserem Durchmesser lediglich Auslenkrollen mit grösserem Durchmesser eingesetzt werden.

Diese einfache Bauweise erlaubt es, die erfindungsgemässe Fördervorrichtung in modular aufgebauten Maschinenstrassen zu verwenden, da beim Austausch resp. Umstellen dieser Maschinenstrassen die Fördervorrichtung nicht demontiert zu werden braucht. Vorteilhafterweise ist die Fördervorrichtung im Maschinensockel gelagert.

Insbesondere kann der Bewegungsablauf der Mitnehmergruppen in einfacher Weise an die Eigenschaften, d.h. an die Grösse und das Gewicht der zu bearbeitenden Behälterrohlinge angepasst werden. Dazu kann die Hüllkurve der Kurvenscheibe so gestaltet werden, dass die Bewegung der Mitnehmer in optimaler Weise die gewünschten Anforderungen erfüllt. Insbesondere sollen sich die Mitnehmer in ihrer Vorwärtsposition ruckfrei (smoothly) und ohne wesentliche Vibrationen zu verursachen öffnen und in der Rückwärtsposition raschmöglichst schliessen. Diese besondere Steuerung des Bewegungsablaufs erlaubt es, die geförderten Behälterrohlinge rasch in eine genaue Maschinenposition zu bringen, ohne dass diese beim Öffnen der Mitnehmergruppen weiterrutschen oder sogar umfallen. Es versteht sich, dass die den Bewegungsablauf bestimmende Hüllkurve der Kurvenscheibe vom Fachmann derart gestaltet wird, dass die einzelnen Bearbeitungsmaschinen optimal ausgelastet sind.

Die vorgeschlagene Ausführungsform weist einen kontinuierlich laufenden Antrieb auf. Dieser trägt wesentlich dazu bei, dass die Fördervorrichtung vibrations- und geräuscharm funktioniert. Durch die Lagerung der Fördervorrichtung im Maschinensockel werden die Vibrationen weiter reduziert.

Durch die Verwendung eines Elektromotors für den Antrieb des Kurbelgetriebes kann die Bewegung der Mitnehmergruppen in einfacher Weise mit den einzelnen Bearbeitungsmaschinen synchronisiert werden und kann die Geschwindigkeit des Bewegungsablaufes elektronisch gesteuert werden.

Im folgenden soll die Erfindung anhand eines Ausführungsbeispiels und mit Hilfe der Figuren näher erläutert werden. Dabei zeigt
- Fig. 1: eine schematische Darstellung einer Maschinenstrasse für die Herstellung von Behältern;
- Fig. 2: eine räumliche Darstellung der erfindungsgemässen Fördervorrichtung;
- Fig. 3: einen Querschnitt durch die erfindungsgemässe Fördervorrichtung;
- Fig. 4a bis 4d: Detaildarstellungen zum Bewegungsablauf des Förderantriebs;
- Fig. 5: Geschwindigkeitsdiagramm der Mitnehmerbewegung

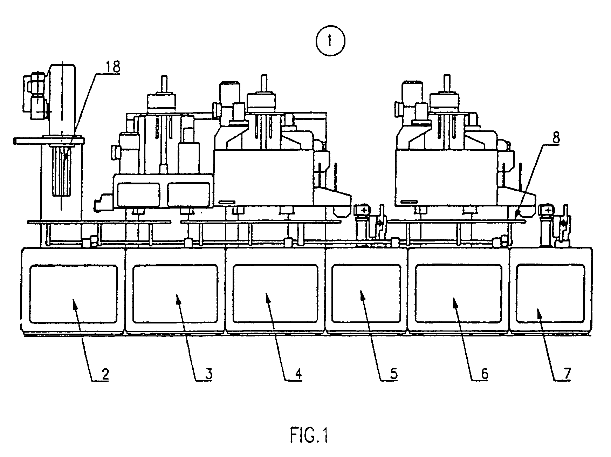

Die in Figur 1 dargestellte Maschinenstrasse 1 weist mehrere modulartig angeordnete Bearbeitungsmaschinen 2 bis 7 auf und ist geeignet, Kübel mit einem Volumen von 3 bis 15 Litern herzustellen. Analoge Maschinenstrassen können Behälter mit einem Volumen von 15 bis 30 Litern resp. 50 bis 70 Litern herstellen. Diese 3-15 Liter fassenden Behälter weisen üblicherweise einen Durchmesser von 160 mm bis 230 mm und eine Höhe von 150 mm bis 300 mm auf. Mit einer modemen Maschinenstrasse können ca. 3600 derartige Behälter pro Stunde gefertigt werden. Diese hohen Bearbeitungsgeschwindigkeiten stellen an die Fördervorrichtungen besondere Anforderungen. Die in Figur 1 gezeigte Maschinenstrasse 1 weist ein erstes Bearbeitungsmodul 2 auf, mit welchem zylindrische Behälterrohlinge, insbesondere Behältermantelrohlinge, konifiziert werden. Mit dem zweiten Maschinenmodul 3 werden die Behälter mit einem oberen Bördelrand und mit Sicken versehen. Das folgende Maschinenmodul 4 formt an diesen Rohlingen einen nach aussen ragenden Flansch und eine Randwulst (seam) an. Das Modul 5 kehrt den vorgängig bearbeiteten Behälterteil um, d.h. stellt ihn auf den Kopf. Der derart verwendete Behälterteil wird in dem Maschinenmodul 6 wiederum mit einem Flansch und Bördelrand versehen und kann mit einem Bodenteil verclinscht werden. Das letzte Maschinenmodul 7 befestigt einen Henkel an den derart fertiggestellten Kübel.

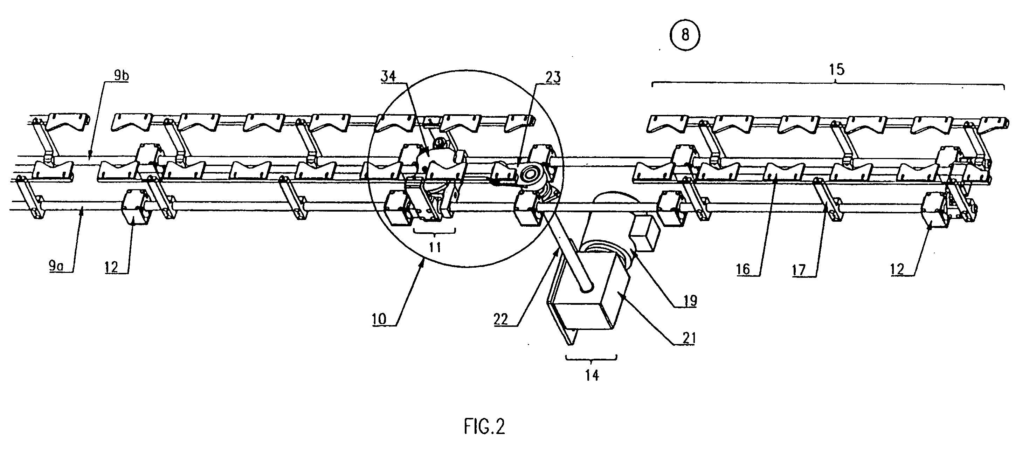

Die in Figur 2 gezeigte Fördervorrichtung 8 umfasst ein Holmpaar 9a, 9b, welches mit einem Kurvengetriebe 11 verbunden und in Führungselementen 12 des Maschinensockels geführt ist. Das Kurvengetriebe 11 (cam drive) ist über eine Gelenkverbindung 13 (nicht dargestellt) mit einem Kurbelgetriebe 14 (crank drive) verbunden. An den Holmen 9a, 9b sind paarweise Mitnehmergruppen 15 befestigt, welche eine Mehrzahl miteinander verbundener Mitnehmer 16 und mit den Holmen fest verbundene Mitnehmerträger 17 (clamping carriers) umfassen. Diese Mitnehmergruppen 15 können durch gegenläufige Drehbewegungen der Holme 9a, 9b synchron voneinander weggeschwenkt oder zueinander hingeschwenkt werden. Ein Förderantrieb 10 steuert diese gegenläufigen Drehbewegungen und erzeugt gleichzeitig eine Verschiebebewegung der Holme 9a, 9b in ihrer Längsrichtung. Das Kurbelgetriebe 14 ist mit den Führungselementen 12 fest verbunden und umfasst einen Antriebsmotor 19, ein Antriebsgetriebe 21, eine Antriebswelle 22 sowie eine Kurbel 23. Die Kurbel 23 des Kurbelgetriebes 14 ist gelenkig mit dem Kurvengetriebe 11 verbunden. Das Kurvengetriebe 11 umfasst eine Kurvenscheibe 34, die in der vorliegenden Ausführungsform mit Hilfe eines Lenkhebels 32 um ihre Drehachse 35 gedreht werden kann. Die Drehachse 35 ist in einem auf den Holmen gleitbar abgestützten Schlitten 29 gelagert. Durch die Rotationsbewegung der Kurbel 23 wird die Kurvenscheibe 34, wegen der Gelenkverbindung 13 zwischen Kurbel 23 und Lenkhebel 32, linear hin- und herbewegt und gleichzeitig hin- und hergedreht. Die Kurvenscheibe 34 weist einen teilberollbaren Rand 33 auf, an welchem Auslenkrollen 36 anliegen. Diese Auslenkrollen 36 sind je in einem Rollenblock 37 fest verbunden derart, dass eine durch die Kurvenscheibe 34 verursachte Auslenkung der Auslenkrollen 36 zu einer axialen Drehbewegung der Holme führt. Für die Förderung von Behälterrohlingen werden die in ihrer Ausgangsstellung geöffneten Mitnehmergruppen 15 zueinander hingeschwenkt, um die Behälterrohlinge zu greifen. Durch die Axialverschiebung der Holme 9a, 9b werden die Behälterrohlinge dem nächsten Bearbeitungsmodul zugeführt. Durch eine gegenläufige Drehung der Holme 9a, 9b um ihre Längsachse werden die Mitnehmergruppen 15 weggeschwenkt und können die Behälterrohlinge von den Bearbeitungsmaschinen bearbeitet werden. Während dieser Bearbeitungszeit werden die Holme 9a, 9b in ihrer gedrehten Position wieder in die Ausgangsstellung zurückgeschoben. Es versteht sich, dass die Kurvenscheibe 34 derart gestaltet ist, dass die Drehbewegung der Holme synchron und gegengleich ausgeführt wird. Insbesondere kann durch die Ausbildung der Kurvenscheibe 34 diese Drehbewegung der Holme 9a, 9b und der an diesen Holmen 9a, 9b befestigten Mitnehmergruppen 15 so gestaltet werden, das bspw. die Schliessbewegung der Mitnehmergruppe 15 schneller abläuft als deren Öffnungsbewegung.

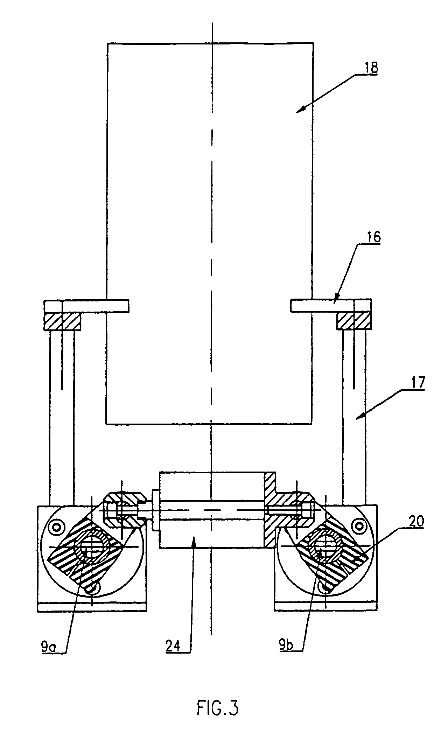

Figur 3 zeigt einen Querschnitt durch eine bevorzugte Ausführungsform der erfindungsgemässen Fördervorrichtung. Um zu vermeiden, das die obengenannten Auslenkrollen 36 des Kurvengetriebes 11 bei einer raschen Drehbewegung der Kurvenscheibe 34 den Kontakt mit dieser Kurvenscheibe 34 verlieren, ist vorzugsweise eine Schliesseinheit 24 vorgesehen, welche zwischen den Holmen 9a, 9b angeordnet ist und auf diese ein nach innen gerichtetes permanentes Drehmoment ausübt. Bei dieser Ausführungsform sind am Holmpaar 9a, 9b ein Paar Klemmschuhe 20 befestigt, welche über diese Schliesseinheit 24 gelenkig miteinander verbunden sind. Diese Schliesseinheit 24 wirkt vorzugsweise über ein hydraulisches oder pneumatisches Drucksystem. Mit diesen Klemmschuhen 20 fest verbunden sind mehrere Mitnehmerträger (clamping carrier) 17. In der bevorzugten Ausführungsform trägt jeder Mitnehmerträger 17 bspw. fünf bis acht Mitnehmer 16.

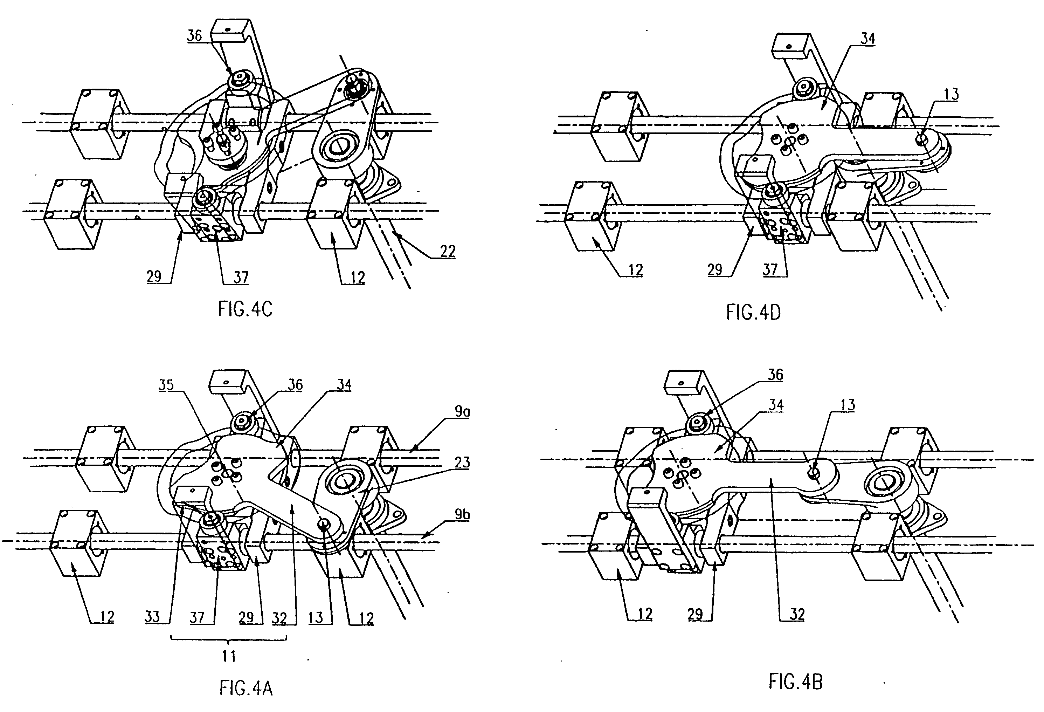

Figuren 4a bis 4d zeigen die Funktionsweise des Förderantriebs. Dieser umfasst ein Kurbelgetriebe 14, dessen Antriebswelle 22 mit einer Kurbel 23 versehen ist. Diese Kurbel 23 ist über ein Drehgelenk 13 mit einem Lenkhebel 32 der Kurvenscheibe 34 verbunden. Die Drehachse 35 dieser Kurvenscheibe 34 ist in einem Schlitten 29 gelagert, welcher auf den Holmen 9a, 9b gleitend abgestützt ist. Durch eine bspw. im Uhrzeigersinn laufende Rotation der Kurbel 23 wird, wie in Figur 4b gezeigt, die Kurvenscheibe 34 im Gegenuhrzeigersinn um ihre Drehachse 35 gedreht und wird gleichzeitig die Drehachse 35 parallel zu den Holmen 9a, 9b von der Antriebswelle 22 weggeschoben. Bei der weiteren Rotation der Kurbel 23 wird, wie in Figur 4c dargestellt, die Kurvenscheibe 34 weiter im Gegenuhrzeigersinn gedreht und wird gleichzeitig die Drehachse 35 der Kurvenscheibe 34 wieder zurückgezogen. Durch die weitere Drehung der Kurbel 23 wird die Kurvenscheibe 34 im Uhrzeigersinn zurückgedreht und wird gleichzeitig die Drehachse 35 noch näher an die Antriebswelle 22 verschoben. Gemeinsam mit der Bewegung der Kurvenscheibe 34 werden die Holme 9a, 9b mit Hilfe der Auslenkrollen 36 und der Rollenblöcke 37 in ihrer Längsachse verschoben resp. um ihre Längsachse gedreht.

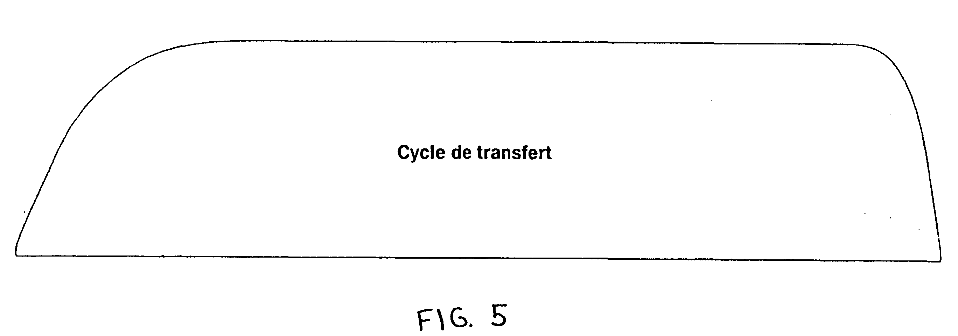

Wie aus Figur 5 ersichtlich, kann durch eine geeignete Gestaltung der Kurvenscheibe der Verlauf der Drehbewegung der Holme 9a, 9b resp. der Verlauf der Öffnungs- und Schliessbewegung der mit diesen Holmen fest verbundenen Mitnehmergruppen 15 gesteuert werden. Diese Figur 5 zeigt ein Diagramm zur Bewegung der Mitnehmer 16 von ihrer Vorwärtsposition in ihre Rückwärtsposition. Dabei werden die Mitnehmer 16 gleichzeitig geöffnet und in die Rückwärtsposition bewegt. Der dargestellte Bewegungsverlauf B dieser Mitnehmer 16 macht deutlich, dass die Öffnungsbewegung A weniger schnell vorgenommen wird als die in Nähe der Rückwärtsposition vorgenommene Schliessbewegung C. In Übereinstimmung mit der Erfindung ist der Kurvenrand 33 der Kurvenscheibe 34 so gestaltet, dass die Geschwindigkeit der Öffnungsbewegung A dem zu fördernden Gut angepasst ist, d.h. nicht ruckartig erfolgt. Insbesondere werden die Mitnehmer 16 erst geöffnet nachdem die Fördervorrichtung an der Bearbeitungsposition gestoppt hat. Damit kann ein ruhiges und präzises Positionieren der Behälter erreicht werden. Es versteht sich, dass die Geschwindigkeitsprofile der Schliessbewegung C und der Öffnungsbewegung A unterschiedlich verlaufen können, d.h. insbesondere die Schliessgeschwindigkeit höher ist als die Öffnungsgeschwindigkeit.

## Patentansprüche

1. Fördervorrichtung für eine modular aufgebaute Maschinenstrasse (1) mit mehreren Bearbeitungsmaschinen zur Herstellung von Behältern, insbesondere von Kübeln oder Fässern, welche Fördervorrichtung (8) zum schrittweisen Fördern ein durch einen Förderantrieb (10) hin- und herbewegbares Holmpaar (9a, b) umfasst, an dessen Holmen (9a, b) mindestens eine Gruppe (15) von schwenkbaren Mitnehmern (16) befestigt ist, wobei das Holmpaar (9a,b) in Führungselementen (12) dreh- und verschiebbar gelagert ist und der Förderantrieb (10) ein Kurbelgetriebe (14) mit einer Kurbel (23) aufweist, welche Kurbel (23) über ein Drehgelenk (13) mit einer um eine Drehachse (35) drehbaren Kurvenscheibe (34) eines Kurvengetriebes (11) verbunden ist, welche Drehachse (35) in einem mit dem Holmpaar (9a,b) laufenden Schlitten (29) gelagert ist und welche Kurvenscheibe (34) einen von Auslenkrollen (36) teilberollbaren Kurvenrand (33) aufweist, wobei jede der Auslenkrollen (36) an einem mit einem der Holme (9a,b) fest verbundenen Rollenblock (37) befestigt ist, derart, dass jeder der Holme (9a,b) durch eine vom Kurbelgetriebe (14) verursachte Drehbewegung der Kurvenscheibe (34) und eine dadurch bewirkte Auslenkbewegung der dem Kurvenrand (33) folgenden Auslenkrollen (36) um seine Längsachse gedreht wird, und wobei jeder der Holme (9a,b) durch eine vom Kurbelgetriebe (14) verursachte Schiebebewegung der Kurvenscheibe (34) in seiner Längsrichtung dadurch verschoben wird, dass der mit der Drehachse (35) der Kurvenscheibe (34) verbundene Schlitten (29) die mit den Holmen (9a,b) fest verbundenen Rollenblöcke (37) mitnimmt.

2. Fördervorrichtung nach Anspruch 1, **dadurch gekennzeichnet, dass** die Kurvenscheibe (34) einen Lenkhebel (32) aufweist.

3. Fördervorrichtung nach Anspruch 2, **dadurch gekennzeichnet, dass** der Lenkhebel (32) in seiner Länge verstellbar ist.

4. Fördervorrichtung nach einem der Ansprüche 1 bis 3, **dadurch gekennzeichnet, dass** der berollbare Kurvenrand (33) der Kurvenscheibe (34) derart gestaltet ist, dass die Schliessbewegung der Mitnehmergruppe (15) schneller abläuft als die Öffnungsbewegung derselben.

5. Fördervorrichtung nach einem der Ansprüche 1 bis 4, **dadurch gekennzeichnet, dass** eine Schliesseinheit (24) vorgesehen ist.

6. Fördervorrichtung nach einem der Ansprüche 1 bis 5, **dadurch gekennzeichnet, dass** die Führungselemente (12) Bestandteile eines Maschinensockels sind.

7. Fördervorrichtung nach einem der Ansprüche 1 bis 6, **dadurch gekennzeichnet, dass** das Kurbelgetriebe (14) einen Antriebsmotor (19), ein Antriebsgetriebe (21) eine Antriebswelle (22) und eine Antriebskurbel (23) umfasst.

8. Fördervorrichtung nach Anspruch 7, **dadurch gekennzeichnet**, das der Antriebsmotor (19) ein kontinuierlich arbeitender Elektromotor ist.

9. Fördervorrichtung nach Anspruch 8, **dadurch gekennzeichnet, dass** der Elektromotor mit den Bearbeitungsmaschinen synchronisiert ist.

10. Fördervorrichtung nach Anspruch 9, **dadurch gekennzeichnet, dass** die Antriebsgeschwindigkeit des Kurbelgetriebes (14) elektronisch gesteuert ist.

## Claims

1. Transfer device for a modularly arranged machine line (1) with a plurality of processing machines for manufacturing containers, in particular tubs or drums, which transfer device (8) moves step-by-step and comprises a pair of bars (9a,9b) which can be driven to and fro by a transfer drive (10), at least one set (15) of tiltable clamps (16) being mounted on the bars (9a,9b) which are rotatably and displaceably mounted in guiding elements (12), said transfer drive (10) having a crank gear (14) with a crank (23), said crank (23) being linked by means of a pivot (13) to a cam (34), rotatable about an axle (35), said axle (35) being mounted in a slide (29) moving with said pair of bars (9a,9b), and said cam (34) having a rim (33) parts of which are followed by deflection rollers (36), each of said deflection rollers (36) being fitted in a roller block (37), fixed to one of the bars (9a,9b) in such a manner that each of the bars (9a,9b) is rotated about its longitudinal axis by a rotational movement of the cam (34) caused by the crank gear (14) and by consequent deflection of the rollers (36) following the rim (33) of the cam (34), and each of the bars (9a,9b) being displaced in its longitudinal direction by a sliding movement of the cam (34) caused by the crank gear (14), such displacement being brought about by the entrainment of the roller blocks (37) (which are fixed to the bars (9a,9b)) by the slide (29) connected to the axle (35) of the cam (34).

2. Transfer device according to claim 1, **characterized in that** the cam (34) has a lever arm (32).

3. Transfer device according to claim 2, **characterized in that** the length of the lever arm (32) is adjustable.

4. Transfer device according to any one of claims 1 to 3, **characterized in that** parts of the rim (33) of the cam (34) are shaped so that the clamping action of the clamp set (15) is faster than its releasing action.

5. Transfer device according to any one of claims 1 to 4, **characterized in that** a closure unit (24) is provided.

6. Transfer device according to any one of claims 1 to 5, **characterized in that** the guiding elements (12) form part of the machine base.

7. Transfer device according to any one of claims 1 to 6, **characterized in that** the crank gear (14) has a drive motor (19), a drive gear (21), a drive shaft (22) and a crank (23).

8. Transfer device according to claim 7, **characterised in that** the drive motor (19) is a continuously running electric motor.

9. Transfer device according to claim 8, **characterized in that** the electric motor is synchronized with the processing machines.

10. Transfer device according to claim 9, **characterized in that** the drive speed of the crank gear (14) is electronically controlled.

## Revendications

1. Appareil de transport pour une chaîne de machines à structure modulaire (1) comprenant plusieurs machines de façonnage pour la fabrication de récipients, en particulier de seaux ou de barils, qui comprend un le dispositif de transport (8) comprenant pour le transport progressif une paire de longerons (9a, b), qui peut être déplacée en va-et-vient par une commande de transport (10), sur lesquels longerons (9a, b) est fixé au moins un groupe (15) de doigts d'entraînement pivotants (16), dans lequel la paire de longerons (9a, b) est montée à rotation et à translation dans des éléments de guidage (12) et la commande de transport (10) présente une commande à manivelle (14) avec une manivelle (23), ladite manivelle (23) étant reliée via un pivot (13) à une came (34) d'un mécanisme à came (11) tournant autour d'un axe de rotation (35), ledit axe de rotation (35) étant monté dans un chariot (29) se déplaçant avec la paire de longerons (9a, b) et ladite came (34) présentant un bord de came (33) qui peut être partiellement parcouru par des galets déviateurs (36), chacun des galets déviateurs (36) étant fixé à un bloc de galets (37) solidement relié à l'un des longerons (9a, b) de telle sorte que chacun des longerons (9a, b) soit entraîné en rotation autour de son axe longitudinal par un mouvement de rotation, dû à la commande à manivelle (14), de la came (34) et un mouvement de déviation ainsi effectué des galets déviateurs (36) suivant le bord (33) de la came, et chacun des longerons (9a, b) étant entraîné en translation dans sa direction longitudinale par un mouvement de translation de la came (34) occasionné par la commande à manivelle (14) dans sa direction longitudinale de telle sorte que le chariot (29) relié à l'axe de rotation (35) de la came (34) entraîne les blocs de galets (37) solidement reliés aux longerons (9a, b).

2. Appareil de transport selon la revendication 1, **caractérisé en ce que** la came (34) présente un levier de commande (32).

3. Appareil de transport selon la revendication 2, **caractérisé en ce que** le levier de commande (32) peut être déplacé sur sa longueur.

4. Appareil de transport selon l'une quelconque des revendications 1 à 3, **caractérisé en ce que** le bord (33) de la came (34) qui peut être parcouru est conformé de telle sorte que le mouvement de fermeture du groupe de doigts d'entraînement (15) se déroule plus rapidement que le mouvement d'ouverture de ce groupe.

5. Appareil de transport selon l'une quelconque des revendications 1 à 4, **caractérisé en ce qu'**il est prévu une unité de fermeture (24).

6. Appareil de transport selon l'une quelconque des revendications 1 à 5, **caractérisé en ce que** les éléments de guidage (12) sont des composantes d'un socle de machine.

7. Appareil de transport selon l'une quelconque des revendications 1 à 6, **caractérisé en ce que** la commande à manivelle (14) comprend un moteur d'entraînement (19), un mécanisme d'entraînement (21), un arbre d'entraînement (22) et une manivelle d'entraînement (23).

8. Appareil de transport selon la revendication 7, **caractérisé en ce que** le moteur d'entraînement (19) est un moteur électrique opérant en continu.

9. Appareil de transport selon la revendication 8, **caractérisé en ce que** le moteur électrique est synchronisé avec les machines de façonnage.

10. Appareil de transport selon la revendication 9, **caractérisé en ce que** la vitesse d'entraînement de la commande à manivelle (14) est commandée par voie électronique.
